# FASCICULE DE BREVET EUROPEEN

(11) **EP 2 031 233 B1**
(45) Date de publication et mention de la délivrance du brevet: **22.09.2010**
(21) Numéro de dépôt: 08161468.7
(22) Date de dépôt: 30.07.2008
(51) Int. Cl.: F02G 1/043, F02C 6/18

(54) **Ventilation et pressurisation de composants dans une turbomachine au moyen d'un moteur Stirling**
Belüftung und Druckbeaufschlagung von Komponenten in einem Turbotriebwerk mittels eines Stirlingmotors
Ventilation and pressurisation of components in a turbomachine by means of a stirling engine

(30) Priorité: 30.08.2007 FR 0706071
(43) Date de publication de la demande: 04.03.2009
(73) Titulaire: Snecma, 75015 Paris (FR)
(72) Inventeur: Behaghel, Laurent, 91230 Montgeron (FR); Coat, Pascal, 91000 Evry (FR); Pierrot, Arnaud, 77350 Le Mee Sur Seine (FR); Rousselin, Stéphane, 77850 Hericy (FR)
(74) Mandataire: Ramey, Daniel

(56) Documents cités:
- EP-A- 0 638 715
- DE-A1- 3 031 872
- DE-A1- 3 234 679
- FR-A- 2 723 987
- JP-A- 1 151 724

## Description

La présente invention concerne les turbomachines à double flux, telles que les turboréacteurs d'avion.

Dans une turbomachine, il est courant de prélever de l'énergie pour permettre le fonctionnement d'organes de la turbomachine. Des prélèvements d'énergie sont par exemple prévus pour l'entraînement d'une pompe à carburant, l'alimentation d'actuateurs et de calculateurs, ou encore pour la pressurisation d'enceintes d'huile. Dans le cas d'un turboréacteur d'avion, des prélèvements supplémentaires sont habituellement prévus, par exemple pour la fourniture d'électricité à bord, l'alimentation d'actuateurs de l'avion tels que des gouvernes ou encore pour la pressurisation de la cabine de l'avion.

Ces prélèvements d'énergie consistent principalement en des prélèvements d'air sur le flux d'air circulant dans le compresseur haute pression de la turbomachine, et en des prélèvements mécaniques sur le rotor haute pression de cette turbomachine.

Or, ces prélèvements nécessitent un travail supplémentaire de la part du compresseur de la turbomachine, entraînant une augmentation de sa consommation spécifique de carburant.

L'invention a notamment pour but d'apporter une solution simple, économique et efficace à ce problème, permettant de réduire la consommation spécifique de carburant des turbomachines, et a pour objet une turbomachine équipée d'une source d'énergie permettant d'éviter une partie au moins des prélèvements précités.

Les documents DE-A1-32 34 679 et DE-A1-30 31 872 décrivent des moteurs Stirling.

Elle propose à cet effet une turbomachine à double flux, comprenant essentiellement une soufflante, un compresseur, une chambre de combustion, une turbine et un carter d'échappement, caractérisée en ce qu'elle comprend un compresseur d'air auxiliaire entraîné par un moteur

Stirling monté en aval de la chambre de combustion et ayant une chambre chaude en contact thermique avec le flux de gaz chauds sortants de la turbine et une chambre froide en contact thermique avec un flux de gaz froids généré par la soufflante et s'écoulant autour de la turbine et du carter d'échappement.

Le moteur thermique à cycle de Stirling, couramment appelé « moteur Stirling », permet de tirer parti de la différence de température entre le flux de gaz chauds, ou flux primaire, sortant de la turbine et le flux de gaz froids, ou flux secondaire, généré par la soufflante, pour produire de l'énergie mécanique. Ce type de moteur se caractérise par un très bon rendement de l'ordre de 40%, par une très bonne fiabilité et une grande longévité.

Le cycle théorique de fonctionnement d'un tel moteur comprend quatre phases successives : une phase de chauffage isochore suivie d'une phase de détente isotherme du fluide de travail dans la chambre chaude, puis une phase de refroidissement isochore suivie d'une phase de compression isotherme du fluide de travail dans la chambre froide.

L'énergie mécanique produite par le moteur Stirling sert à l'entraînement d'un compresseur à air auxiliaire destiné à fournir de l'air sous pression à des composants de la turbomachine, de manière à réduire les besoins en prélèvements d'air sur le flux d'air circulant dans le compresseur haute pression de cette turbomachine.

Dans un mode de réalisation préféré de l'invention, le moteur Stirling est fixé sur le carter de turbine ou sur le carter d'échappement, ce qui permet de bénéficier d'un espace libre important entre les veines d'écoulement des flux primaire et secondaire pour le logement du moteur Stirling et du compresseur auxiliaire. Cette zone se révèle d'autant plus appropriée que l'écart de température entre le flux primaire de gaz chauds et le flux secondaire de gaz froids y est d'environ 450 degrés en régime de fonctionnement normal, ce qui constitue un gradient thermique suffisant pour permettre un bon fonctionnement du moteur Stirling.

Selon une autre caractéristique de l'invention, le moteur Stirling comprend un échangeur de chaleur logé dans le flux de gaz froids et un échangeur de chaleur logé dans le flux de gaz chauds, ces échangeurs comportant de préférence des ailettes internes et/ou externes.

Ces échangeurs permettent de maximiser les échanges de chaleur entre le flux de gaz froids, respectivement de gaz chauds, et un fluide de travail contenu dans le moteur Stirling, pour optimiser les performances de ce dernier.

Dans le mode de réalisation préféré de l'invention, la sortie du compresseur d'air auxiliaire est reliée à des moyens de ventilation ou de pressurisation d'un composant de la turbomachine par un conduit équipé d'une vanne commandée ou autonome à deux positions, connectant les moyens de ventilation ou de pressurisation du composant soit à la sortie du compresseur auxiliaire, soit à des moyens de prélèvement d'air sur le compresseur de la turbomachine.

Ainsi, lorsque la turbomachine fonctionne à bas régime, le gradient thermique entre les gaz chauds et les gaz froids est insuffisant pour permettre un bon fonctionnement du moteur Stirling, et le refroidissement ou la pressurisation du composant de la turbomachine est assurée de manière classique par un prélèvement sur le flux d'air du compresseur de la turbomachine. Ce n'est que lorsque le régime atteint un niveau suffisant pour permettre un bon fonctionnement du moteur Stirling que la vanne commandée bascule dans sa position de connexion des moyens de ventilation ou de pressurisation à la sortie du compresseur auxiliaire.

Avantageusement, la vanne est commandée par un bloc électronique de contrôle, par exemple à partir d'une mesure de la température des gaz passant dans la turbine.

En variante, la vanne est un clapet autonome calibré sur le niveau de pression requis pour les ventilations et pressurisations de la turbomachine.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique en coupe axiale d'une turbomachine selon l'invention ;
- la figure 2 est une vue schématique en coupe axiale et à plus grande échelle de la turbomachine de la figure 1.

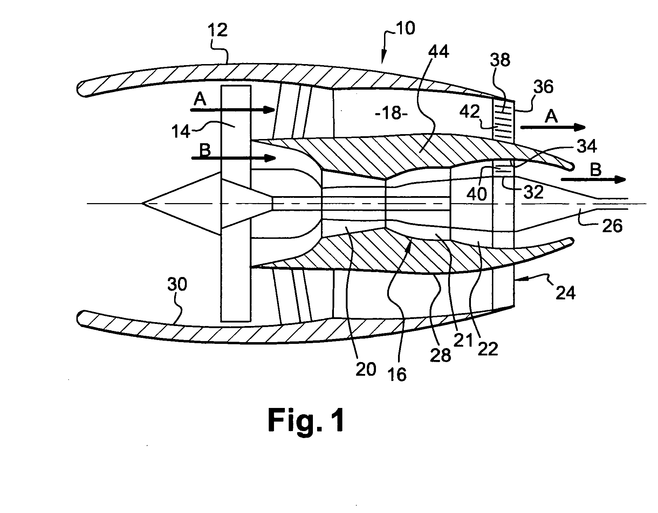

La figure 1 représente un turboréacteur à double flux 10 et comportant une nacelle 12 dans laquelle une roue de soufflante 14 est montée en amont d'un corps de moteur 16 comprenant essentiellement, d'amont en aval, un compresseur 20, une chambre de combustion 21, une turbine 22, un carter d'échappement 24 et un cône d'éjection 26.

La roue de soufflante 14 est entraînée en rotation par la turbine 22 du turboréacteur, d'une façon bien connue de l'homme du métier. Pendant le fonctionnement du moteur, la soufflante 14 génère un flux d'air secondaire A, qui s'écoule vers l'arrière autour du turboréacteur dans une conduite de soufflante 18, et qui fournit une partie de la poussée du moteur. Une partie de l'air entrant dans le moteur forme un flux primaire B qui alimente le compresseur d'entrée 20 du turboréacteur, puis est mélangé à du carburant dans la chambre de combustion 21. Les gaz de combustion sortant de la chambre de combustion entraînent la turbine 22 puis sont éjectés entre deux parois coaxiales 32, 34 du carter d'échappement 24 et sortent du turboréacteur en s'écoulant le long du cône d'éjection 26.

La conduite de soufflante 18 est formée de deux parois coaxiales sensiblement cylindriques, respectivement interne 28 et externe 30. La paroi interne 28 de la conduite de soufflante est généralement appelée I.F.D. (Inner Fan Duct) tandis que la paroi externe 30 est généralement appelée O.F.D. (Outer Fan Duct) et est entourée par la nacelle 12.

Les deux parois coaxiales, respectivement interne 32 et externe 34, du carter d'échappement 24 sont reliées par des bras radiaux structuraux 36.

Chaque bras radial 36 du carter d'échappement 24 relie les parois coaxiales 32, 34 de ce carter aux parois cylindriques 28, 30 de la conduite de soufflante 18, de sorte qu'une partie 40 du bras 36 intercepte le flux primaire B tandis qu'une autre partie 42 de ce bras intercepte le flux secondaire A.

Le bras radial 36 visible dans la moitié supérieure de la figure 1 comprend un moteur à cycle de Stirling de type Bêta. Ce moteur comprend, de manière classique, une chambre chaude et une chambre froide qui sont reliées pour la circulation d'un fluide de travail contenu dans ces chambres et déplacé d'une chambre à l'autre par le mouvement d'un piston déplaceur.

La chambre chaude est disposée dans la partie 40 du bras 36 qui intercepte le flux primaire B d'air chaud, tandis que la chambre froide est disposée dans la partie 42 du bras 36 qui intercepte le flux secondaire A d'air froid.

Des ailettes 38 sont avantageusement formées sur la surface externe et/ou interne des bras radiaux 36 au niveau des parties 40 et 42 de ces bras, afin d'optimiser les échanges thermiques entre le flux B d'air chaud et le fluide de travail contenu dans la chambre chaude logée dans la partie 40 du bras radial d'une part, et entre le flux A d'air froid et le fluide de travail contenu dans la chambre froide logée dans la partie 42 de ce bras.

Au cours de sa circulation dans les chambres froide et chaude, le fluide de travail décrit un cycle thermodynamique de Stirling composé de quatre phases successives au cours desquelles il est tour à tour refroidi, comprimé, chauffé puis détendu, en entraînant en translation un piston de travail.

Les pistons déplaceur et de travail sont logés dans une chambre de travail reliée aux chambres chaude et froide, et disposée dans un espace 44 couramment appelé « interveine », compris entre les veines d'écoulement des flux primaire B et secondaire A, c'est-à-dire entre la paroi externe 34 du carter d'échappement et la paroi interne 28 délimitant la conduite de soufflante, de sorte que cette chambre de travail n'est pas en contact thermique avec les flux primaire et secondaire. La chambre de travail pourrait également être fixée sur la face radialement interne de la paroi interne 32 du carter d'échappement, à condition que les échanges de chaleur avec le flux primaire en contact avec cette paroi 32 soient limités par un moyen d'isolation thermique.

Le piston de travail du moteur Stirling forme ou entraîne un organe mobile d'un compresseur d'air auxiliaire, logé dans l'espace interveine 44, et destiné à alimenter en air sous pression des composants de la turbomachine pour assurer par exemple leur ventilation ou leur pressurisation.

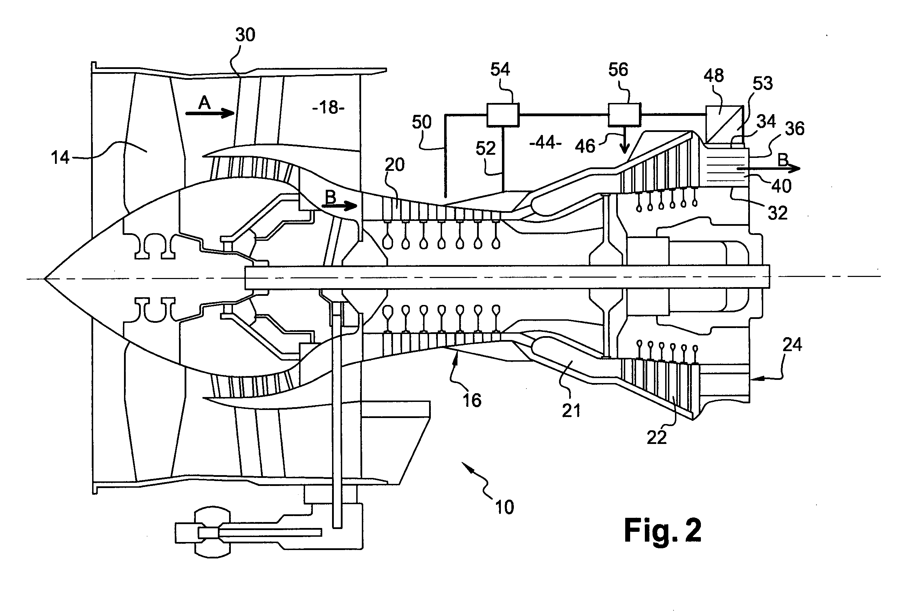

Sur la figure 2 est représentée schématiquement la connexion de la sortie d'air du compresseur auxiliaire 48 à l'entrée 46 d'un circuit de distribution d'air sous pression (non visible) à des composants de la turbomachine.

Des prélèvements 50, 52 sur le flux d'air s'écoulant dans le compresseur haute pression 20 de la turbomachine sont aménagés pour assurer l'alimentation du circuit de distribution d'air sous pression pendant les phases de fonctionnement du turboréacteur où l'écart de température entre les gaz froids du flux secondaire A et les gaz chauds du flux primaire B est trop petit pour permettre au moteur Stirling 53 de fournir une puissance mécanique suffisante pour l'entraînement du compresseur auxiliaire 48.

Une vanne 54 à deux positions permet de connecter alternativement l'entrée du circuit de distribution d'air au prélèvement 50 sur le quatrième étage du compresseur haute pression 20, pendant les phases de démarrage du turboréacteur, et au prélèvement 52 sur le neuvième étage du compresseur haute pression 20, en régime de croisière tant que l'écart thermique entre les flux primaire et secondaire n'est pas suffisant pour permettre l'entraînement du compresseur auxiliaire 48 par le moteur Stirling ou en cas de défaillance du moteur Stirling ou du compresseur auxiliaire.

Une vanne 56 à deux positions permet de connecter alternativement l'entrée du circuit de distribution d'air à la vanne 54 lorsque le turboréacteur se trouve dans l'une des situations de fonctionnement précitées, et au compresseur auxiliaire 48 lorsque l'écart thermique entre les flux primaire et secondaire atteint un seuil permettant au moteur Stirling 53 d'entraîner de façon performante le compresseur auxiliaire 48.

Les vannes 54 et 56 sont commandées par un bloc électronique de contrôle de type FADEC, à partir de mesures de température des gaz chauds et froids s'écoulant dans la turbomachine, au voisinage du moteur Stirling.

Alternativement, les vannes pourraient être commandées à partir de mesures de pression de l'air délivré par les prélèvements 50, 52 et par le compresseur auxiliaire 48.

Les vannes pourraient également être autonomes, et calibrées sur les niveaux de pressions nécessaires à l'alimentation du circuit de distribution d'air sous pression.

Ce circuit de distribution d'air assure par exemple la pressurisation de capots d'enceintes de paliers de la turbomachine, la ventilation du premier étage d'un distributeur basse pression, la ventilation de jantes de disques de turbine basse pression, et la purge d'une cavité située en aval d'un disque de turbine haute pression.

Pour ce faire, le compresseur auxiliaire 48 délivre un débit de 1,5 kg/s environ d'air à une pression relative de l'ordre de 0,3 bars en régime de fonctionnement nominal. Ce compresseur se présente sous la forme d'un cylindre de 100 mm de diamètre environ pour approximativement 120 mm de longueur.

L'entraînement de ce compresseur requiert qu'une puissance mécanique de 10 kW environ lui soit transmise par le moteur Stirling, ce moteur se présentant grossièrement sous la forme d'un cylindre de 100 mm de diamètre environ pour approximativement 200 mm de longueur.

De manière générale, l'invention permet donc de limiter le recours à des prélèvements sur le flux d'air utile à la propulsion s'écoulant dans le compresseur du turboréacteur, grâce à un compresseur auxiliaire entraîné par un moteur Stirling capable de convertir de l'énergie thermique contenue dans le flux primaire de gaz chauds provenant de la chambre de combustion du turboréacteur en énergie mécanique.

L'invention n'est bien entendu pas limitée aux turboréacteurs d'avion et peut être appliquée à tout type de turbomachine à double flux.

## Revendications

1. Turbomachine à double flux (10), comprenant essentiellement une soufflante (14), un compresseur (20), une chambre de combustion (21), une turbine (22) et un carter d'échappement (24), la turbomachine étant **caractérisée en ce qu'**elle comprend un compresseur d'air auxiliaire (48) entraîné par un moteur Stirling (53) monté en aval de la chambre de combustion (21) et ayant une chambre chaude en contact thermique avec le flux (B) de gaz chauds sortants de la turbine et une chambre froide en contact thermique avec un flux (A) de gaz froids généré par la soufflante (14) et s'écoulant autour de la turbine (22) et du carter d'échappement (24).

2. Turbomachine (10) selon la revendication 1, **caractérisée en ce que** le moteur Stirling (53) est fixé sur le carter de turbine ou sur le carter d'échappement (24).

3. Turbomachine (10) selon la revendication 1 ou 2, **caractérisée en ce que** le moteur Stirling (53) comprend un échangeur de chaleur (42) logé dans le flux (A) de gaz froids et un échangeur de chaleur (40) logé dans le flux (B) de gaz chauds.

4. Turbomachine (10) selon la revendication 3, **caractérisée en ce que** les échangeurs de chaleur (40, 42) comportent des ailettes (38) internes et/ou externes.

5. Turbomachine (10) selon l'une des revendications 1 à 4, **caractérisée en ce que** la sortie du compresseur d'air auxiliaire (48) est reliée à des moyens de ventilation ou de pressurisation d'un composant de la turbomachine par un conduit équipé d'une vanne commandée ou autonome à deux positions (56), connectant les moyens de ventilation ou de pressurisation du composant soit à la sortie du compresseur auxiliaire, soit à des moyens (50, 52, 54) de prélèvement d'air sur le compresseur (20) de la turbomachine.

6. Turbomachine (10) selon la revendication 5, **caractérisée en ce que** la vanne (56) est commandée par la température des gaz passant dans la turbine (22).

7. Turbomachine (10) selon la revendication 5 ou 6, **caractérisée en ce que** la vanne (56) est commandée par un bloc électronique de contrôle.

8. Turbomachine (10) selon la revendication 5, **caractérisée en ce que** la vanne (56) est un clapet autonome calibré sur le niveau de pression requis pour les ventilations et pressurisations de la turbomachine.

## Claims

1. Dual-flow turbomachine (10), essentially comprising a fan (14), a compressor (20), a combustion chamber (21), a turbine (22) and an exhaust casing (24), **characterized in that** this turbomachine comprises an auxiliary air compressor (48) driven by a Stirling engine (53) mounted downstream of the combustion chamber (21) and having a hot chamber in thermal contact with the flow (B) of hot gases leaving the turbine and a cold chamber in thermal contact with a flow (A) of cold gases generated by the fan (14) and flowing around the turbine (22) and the exhaust casing (24).

2. Turbomachine (10) as claimed in claim 1, **characterized in that** the Stirling engine (53) is fixed to the turbine casing or to the exhaust casing (24).

3. Turbomachine (10) as claimed in claim 1 or 2, **characterized in that** the Stirling engine (53) comprises a heat exchanger (42) positioned in the flow (A) of cold gases and a heat exchanger (40) positioned in the flow (B) of hot gases.

4. Turbomachine (10) as claimed in claim 3, **characterized in that** the heat exchangers (40, 42) comprise internal and/or external vanes (38).

5. Turbomachine (10) as claimed in any one of claims 1 to 4, **characterized in that** the outlet of the auxiliary air compressor (48) is linked to means of ventilating or pressurizing a component of the turbomachine via a pipe fitted with a controlled or autonomous two-position valve (56), connecting the component ventilation or pressurization means either to the outlet of the auxiliary compressor or to means (50, 52, 54) of tapping air from the compressor (20) of the turbomachine.

6. Turbomachine (10) as claimed in claim 5, **characterized in that** the valve (56) is controlled by the temperature of the gases passing into the turbine (22).

7. Turbomachine (10) as claimed in claim 5 or 6, **characterized in that** the valve (56) is controlled by an electronic control block.

8. Turbomachine (10) as claimed in claim 5, **characterized in that** the valve (56) is an autonomous check valve calibrated to the pressure level necessary for the ventilations and pressurizations of the turbomachine.

## Patentansprüche

1. Zweikreis-Turbotriebwerk (10), das im Wesentlichen ein Gebläse (14), einen Verdichter (20), eine Brennkammer (21), eine Turbine (22) und ein Ausstoßgehäuse (24) umfasst, **dadurch gekennzeichnet,**
**dass** es einen zusätzlichen Luftverdichter (48) aufweist, der durch einen Stirling-Motor (53) angetrieben wird, welcher hinter der Brennkammer (21) eingebaut ist und eine heiße Kammer aufweist, die in Wärmekontakt mit dem Strom (B) heißer Gase aus der Turbine ist, sowie eine kalte Kammer aufweist, die in Wärmekontakt mit einem Strom (A) kalter Gase ist, die von dem Gebläse (14) erzeugt werden und die Turbine (22) und das Ausstoßgehäuse (24) umströmen.

2. Turbotriebwerk (10) nach Anspruch 1,
**dadurch gekennzeichnet,**
**dass** der Stirling-Motor (53) an dem Turbinengehäuse oder an dem Ausstoßgehäuse (24) befestigt ist.

3. Turbotriebwerk (10) nach Anspruch 1 oder 2,
**dadurch gekennzeichnet,**
**dass** der Stirling-Motor (53) einen Wärmetauscher (42), der in dem Strom (A) kalter Gase gelagert ist, und einen Wärmetauscher (40), der in dem Strom (B) heißer Gase gelagert ist, umfasst.

4. Turbotriebwerk (10) nach Anspruch 3,
**dadurch gekennzeichnet,**
**dass** die Wärmetauscher (40, 42) innere und/oder äußere Rippen (38) aufweisen.

5. Turbotriebwerk (10) nach einem der Ansprüche 1 bis 4,
**dadurch gekennzeichnet,**
**dass** der Austritt des zusätzlichen Luftverdichters (48) mit Mitteln zur Belüftung oder Druckbeaufschlagung einer Komponente des Turbotriebwerks verbunden ist, und zwar durch eine Leitung, die mit einem gesteuerten oder selbststeuernden Ventil mit zwei Stellungen (56) ausgerüstet ist, welches die Mittel zur Belüftung oder Druckbeaufschlagung der Komponente entweder mit dem Austritt des zusätzlichen Luftverdichters oder mit Mitteln (50, 52, 54) zur Luftentnahme am Verdichter (20) des Turbotriebwerks verbindet.

6. Turbotriebwerk (10) nach Anspruch 5,
**dadurch gekennzeichnet,**
**dass** das Ventil (56) durch die Temperatur der durch die Turbine (22) strömenden Gase gesteuert wird.

7. Turbotriebwerk (10) nach Anspruch 5 oder 6,
**dadurch gekennzeichnet,**
**dass** das Ventil (56) durch einen elektronischen Steuerblock gesteuert wird.

8. Turbotriebwerk (10) nach Anspruch 5,
**dadurch gekennzeichnet,**
**dass** das Ventil (56) ein selbststeuerndes Klappenventil ist, das auf die Druckhöhe eingestellt ist, die für die Belüftungen und Druckbeaufschlagungen des Turbotriebwerks erforderlich ist.
